(19) **Europäisches Patentamt**
**European Patent Office**
**Office européen des brevets**

(11) **EP 2 065 854 B1**

(12) **EUROPEAN PATENT SPECIFICATION**

(45) Date of publication and mention
of the grant of the patent:
**12.12.2012 Bulletin 2012/50**

(51) Int Cl.:
***G06T 15/04*** (2011.01)

(21) Application number: **07806219.7**

(86) International application number:
**PCT/JP2007/066742**

(22) Date of filing: **29.08.2007**

(87) International publication number:
**WO 2008/035550 (27.03.2008 Gazette 2008/13)**

(54) **posture dependent normal vectors for texture mapping**

Haltungsabhängige Normalenvektoren für Texture Mapping

vecteurs normaux dépendants de la posture pour le mappage de texture

(84) Designated Contracting States:
**DE FR GB**

(30) Priority: **21.09.2006 JP 2006255459**

(43) Date of publication of application:
**03.06.2009 Bulletin 2009/23**

(73) Proprietor: **Konami Digital Entertainment Co., Ltd.**
**Tokyo 107-8324 (JP)**

(72) Inventors:
• **ENDO, Masashi**
**Tokyo 107-8324 (JP)**
• **NAGAI, Toru**
**Tokyo 107-8324 (JP)**
• **TSUNASHIMA, Tadaaki**
**Tokyo 107-8324 (JP)**

(74) Representative: **Winter, Brandl, Fürniss, Hübner,**
**Röss, Kaiser, Polte - Partnerschaft**
**Alois-Steinecker-Strasse 22**
**85354 Freising (DE)**

(56) References cited:
**JP-A- 07 254 072        JP-A- 2006 127 412**
**US-A1- 2004 012 602     US-A1- 2006 170 681**
**US-B1- 6 525 731**

• **"Character Modeling" In: Brett Allen: "Learning**
**body shape models from real-world data" 2005,**
**University of Washington , XP002593618 , pages**
**15-32 * section 3.6.2 Pose-dependent normal**
**maps ***

**Description**

TECHNICAL FIELD

The present invention relates to an image processing device, a control method for an image processing device, and an information recording medium.

BACKGROUND ART

In a three dimensional image process, a picture obtained by looking at a virtual three dimensional space where an object is placed from a given viewpoint is displayed for output. For the above, a technique referred to as bump mapping is available for expressing concave and convex features on a surface of an object. According to bump mapping, the normal vector of an object surface is modified according to the concave and convex features so that shadow (light and shade) in accordance with the concave and convex features can be imparted to the object surface. That is, use of bump mapping can impart shadow (light and shade) in accordance with concave and convex features to an object surface without strict expression of the concave and convex features on the object surface, using polygons.

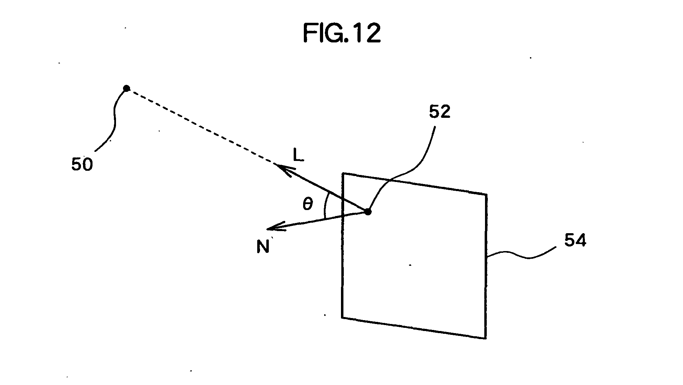

According to typical bump mapping, a normal vector (hereinafter referred to as a "pseudo-normal vector") is hypothetically set on each of the pixels for a texture image to be mapped onto an object surface, and a shading process (a process for imparting shadow in accordance with concave and convex features to an object surface) is carried out for the object surface, based on the pseudo-normal vectors set for the respective pixels. In the above, data referred to as a "normal map" is generally prepared as data indicating a pseudo-normal vector for each pixel of a texture image to be mapped onto the object surface. A normal map is data expressing a pseudo-normal vector set for each pixel of a texture image in the form of an RGB value. That is, a normal map is data expressing a WX axial direction component in the virtual three dimensional space (or a space comprising the WX, WY, and WZ axes) in the form of an R (red) value, a WY axial direction component in the form of a G (green) value, and a WZ axial direction component in the form of a B (blue) value. Fig. 12 is a diagram outlining the shading process. In the shading process, in rendering a polygon 54 which forms an object, the brightness of each pixel 52 is determined based on the pseudo-normal vector N of the pixel 52. More specifically, the brightness of each image 52 is determined such that when the angle $\theta$ formed by the light source direction vector L indicating the direction from the pixel 52 to the light source 50 and the pseudo-normal vector N of the pixel 52 is smaller, higher brightness results for the pixel 52, and when the angle $\theta$ is larger, lower brightness results for the pixel 52. This arrangement can impart fine shading on an object surface.

Patent Document 1: JP2001-283250A
Patent Document 2: JP2004-102900A

In: Brett Allen: "Learning body shape models from real-world data", 2005, University of Washington, pages 15-32, there is described character modeling and how to represent pose-dependent deformations. A character model consists of a default posture (dress pose) and a set of corrected data, i. e. for every joint of the character model, vector offsets for vertices effected by said joint are stored for a number of key angles. A new pose of the character is computed by adjusting the dress shape by adding a rated combination of the vector offsets for each vertex. The rates are derived from the current pose and the key angles.

DISCLOSURE OF THE INVENTION

Problems to be Solved by the Invention

In the above-described three dimensional imaging process, preferable production of a picture in which the shade expressed on a surface of an object will change according to change in the posture of the object could further enhance the reality.

The present invention has been conceived in view of the above, and aims to provide an image processing device, an image processing device control method, and an information recording medium capable of preferably producing a picture in which the shade expressed on a surface of an object will change according to change in the posture of the object. The object is solved by the features of the independent claims. The dependent claims are directed to preferred embodiments of the invention.

The present invention relates to an image processing device for displaying a picture obtained by looking at a virtual three dimensional space where an object is placed from a given viewpoint. According to the present invention, a posture condition concerning the posture of the object and pseudo-normal vector information for obtaining a pseudo-normal vector for each pixel of a texture image to be mapped onto a surface of the object are stored so as to be correlated to each other. Also, whether or not the posture of the object satisfies the posture condition correlated to the respective pseudo-normal vector information is determined. Also, a pseudo-normal vector for each pixel of the texture image is obtained based on the pseudo-normal vector information stored so as to be correlated to the posture condition satisfied by the posture of the object. Then, a shading process is carried out for the surface of the object, based on the pseudo-normal vector obtained.

Also, in one embodiment of the present invention, the image processing device may comprise basic pseudo-normal vector storage means for storing a plurality of basic pseudo-normal vectors so as to be correlated to each pixel of the texture image, wherein the pseudo-normal vector information may be information indicating a combination ratio for the plurality of basic pseudo-normal vectors, and the pseudo-normal vector obtaining means may obtain the pseudo-normal vector for each pixel of the texture image by combining the plurality of basic pseudo-normal vectors stored in the basic pseudo-normal vector storage means so as to be correlated to the pixel, based on the combination ratio correlated to the posture condition satisfied by the posture of the object.

Also, in another embodiment of the present invention, the pseudo-normal vector information may be information indicating the pseudo-normal vector for each pixel of the texture image.

BRIEF DESCRIPTION OF THE DRAWINGS

Fig. 1 is a diagram showing a hardware structure of a game device according to this embodiment;
Fig. 2 is a diagram showing one example of a virtual three dimensional space;
Fig. 3 is a diagram showing change in the posture of a player object running;
Fig. 4 is a diagram concerning a normal map stored in a game device;
Fig. 5 is a diagram showing one example of a combination ratio table;
Fig. 6 is a flowchart of a process to be carried out in the game device;
Fig. 7 is a flowchart of a process to be carried out in the game device;
Fig. 8 is a diagram outlining a process for determining brightness of a pixel;
Fig. 9 is a diagram showing one example of a normal map table;
Fig. 10 is a functional block diagram of the game device according to the embodiment;
Fig. 11 is a diagram showing an overall structure of a game distribution system according to another embodiment of the present invention; and
Fig. 12 is a diagram illustrating concept of a bum mapping process using a normal map.

BEST MODE FOR CARRYING OUT THE INVENTION

In the following, one example of an embodiment of the present invention will be described in detail with reference to the accompanying drawings. Here, an example in which the present invention is applied to a game device which is one embodiment of an image processing device will be described. Note that the present invention is applicable to an image processing device other than a game device.

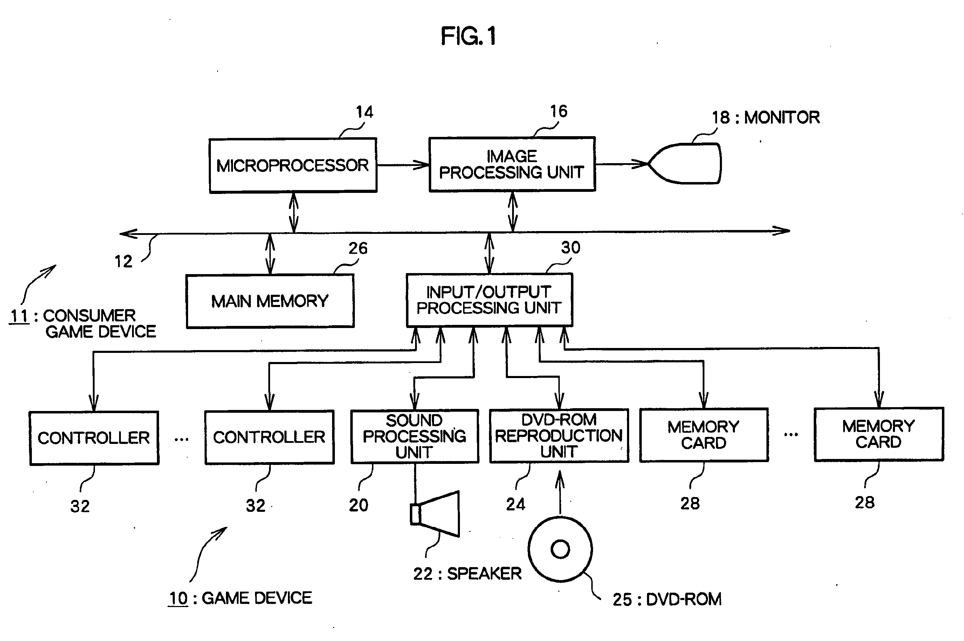

Fig. 1 is a diagram showing a structure of a game device according to an embodiment of the present invention. The shown game device 10 comprises a consumer game device 11 having a DVD-ROM 25 and a memory card 28, or information storage media, mounted thereto and a monitor 18 and a speaker 22 connected thereto. For example, the monitor 18 may be a home-use television set receiver; the speaker 22 may be a built-in speaker of the home-use television set receiver.

The consumer game device 11 is a publicly known computer game system comprising a bus 12, a microprocessor 14, an image processing unit 16, a sound processing unit 20, a DVD-ROM reproduction unit 24, a main memory 26, an input/output processing unit 30, and a controller 32. The respective structural elements other than the controller 32 are accommodated in an enclosure.

The bus 12 is used for exchanging an address and/or data among the respective units of the consumer game device 11. The microprocessor 14, image processing unit 16, main memory 26, and input/output processing unit 30 are mutually connected via the bus 12 for data exchange.

The microprocessor 14 controls the respective units of the consumer game device 11, based on an operation system stored in a ROM (not shown), a game program and game data read from the DVD-ROM 25 and/or memory card 28. The main memory 26 comprises, e.g., a RAM, into which a game program and/or game data read from the DVD-ROM 25 and/or memory card 28 is written as required. The main memory 26 is used also as a working memory of the microprocessor 14.

The image processing unit 16 comprises a VRAM, and receives image data sent from the microprocessor 14 and renders a game screen image into the VRAM. Further, the image processing unit 16 converts the content of the game screen image into a predetermined video signal, and outputs to the monitor 18 at a predetermined time. That is, the image processing unit 16 receives from the microprocessor 14, the vertex coordinates, vertex color information (R, G, B values), texture coordinates, an alpha value, and the like of each polygon in the viewpoint coordinate system and then, using the information, writes the color information, Z value (depth information), alpha value, and the like of each pixel for a display image into a display buffer in the VRAM. In the above, a texture image is written beforehand in the VRAM and an area in the texture image, the area being specified by the texture coordinates is mapped (attached) to a polygon specified by the vertex coordinates corresponding to the texture coordinates. The thus produced display image is output to the monitor 18 at a predetermined time.

The input/output processing unit 30 is an interface via which the microprocessor 14 accesses the sound processing unit 20, DVD-ROM reproduction unit 24, memory card 28, and controller 32. The sound processing unit 20, DVD-ROM reproduction unit 24, memory card 28, and controller 32 are connected to the input/output processing unit 30.

The sound processing unit 20 comprises a sound buffer, and reproduces various sound data, such as game music, game sound effect, a message, and the like, having been read from the DVD-ROM 25 and stored in the sound buffer, and outputs via the speaker 22.

The DVD-ROM reproduction unit 24 reads a game program and game data recorded in the DVD-ROM 25 according to an instruction from the microprocessor 14. Note that although the DVD-ROM 25 is used here to provide a game program and game data to the consumer game device 11, any other information recording medium, such as a CD-ROM, a ROM card, and the like, may be used instead. Alternatively, a game program and game data may be provided via data communication network, such as the Internet and the like, from a remote place to the consumer game device 11.

The memory card 28 comprises a nonvolatile memory (e.g., EEPROM, and the like). The consumer game device 11 has a plurality of memory card slots defined therein so that a plurality of memory cards 28 can be mounted at the same time. The memory card 28 can be removed from the memory card slot and is used to store various game data, such as saved data and the like.

The controller 32 is a general purpose operation input means for use by a player to input various game operations. The input/output processing unit 30 scans the states of the respective units of the controller 32 every constant period (e.g., every 1/60th of a second) and sends an operation signal indicating the scanning result to the microprocessor 14 via the bus 12. The microprocessor 14 determines the game operation carried out by the player, based on the operation signal. The consumer game device 11 is formed adapted to connection to a plurality of controllers 32 so that the microprocessor 14 controls a game, based on operation signals input from the respective controllers 32.

In the following, a technique for preferably producing, in a game device 10 having the above described structure, a picture in which the shade expressed on a surface of an object will change according to change in the posture of the object, will be described. Here, an example in which the shade expressed on a uniform of a player character will change according to change in the posture of the player character running in a soccer game will be described.

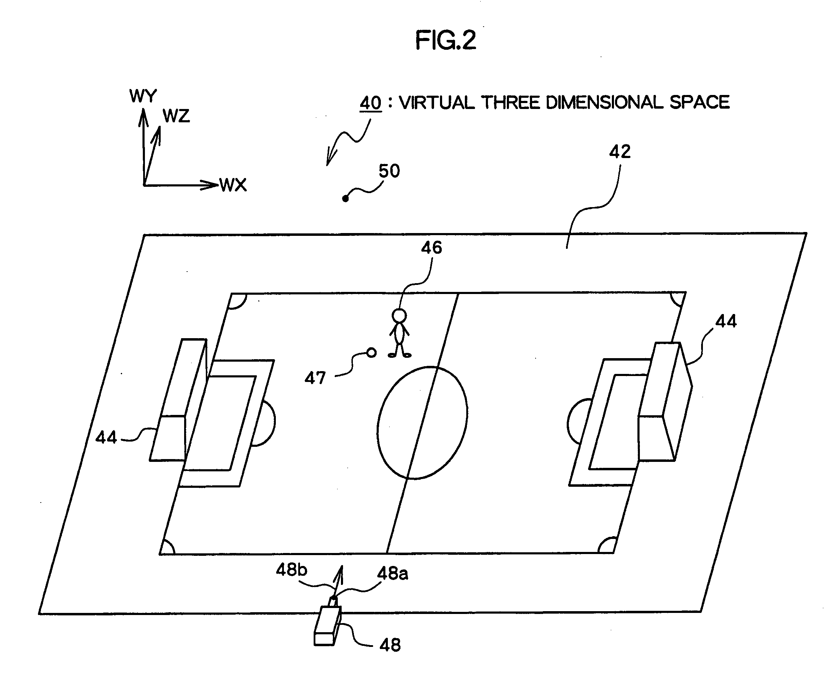

Initially, a virtual three dimensional space created in the main memory 26 will be described. Fig. 2 is a diagram showing one example of a virtual three dimensional space. As shown in Fig. 2, a field object 42 representing a soccer field and goal objects 44 representing goals are placed in the virtual three dimensional space 40 so that a place for a soccer match is set. A player object 46 representing a soccer player and a ball object 47 representing a soccer ball are placed on the field object 42. A texture image representing, e.g., a uniform is mapped on the player object 46. Twenty two player objects 46, though not shown in Fig. 2, are placed on the field object 42. Each of the objects placed in the virtual three dimensional space 40 is formed using one or more polygons.

A virtual camera 48 (a viewpoint 48a and a viewing direction 48b) is set in the virtual three dimensional space 40. The virtual camera 48 moves according to the movement of, for example, the ball object 47. A game screen image showing a picture obtained by looking at the virtual three dimensional space 40 from the virtual camera 48 is shown on the monitor 18. That is, a picture obtained by looking at the virtual three dimensional space 40 from the viewpoint 48a in the viewing direction 48b is displayed in a game screen image. A player operates the controller 32, while looking at the game screen image, thereby issuing a motion instruction with respect to, for example, an operation target player object 46.

A light source 50 is also set in the virtual three dimensional space 40. A picture in which shade is formed on the uniform of the player object 46 due to the light source 50 and shadows of the goal object 44, player object 46, and ball object 47 are formed on the field object 42 due to the light source 50 are shown in the game screen image.

In the following, data stored in the game device 10 will be described.

In the DVD-ROM 25, model data indicating the shape of each object placed in the virtual three dimensional space 40 and texture image to be mapped onto a respective object are stored. For example, model data indicating the shape of each player object 46 and texture image representing the uniform of the player object 46 (hereinafter referred to as a "uniform texture image") are stored. In the DVD-ROM 25, motion data corresponding to the respective motions of the player object 46 is stored. Motion data is data indicating change in the posture every predetermined period of time (1/60th of a second in this embodiment) of the player object 46 performing various motions (e.g., running motion, pass motion, and so forth). Note that to cause the player object 46 to perform motion according to motion data is described as "to reproduce motion data" here.

A normal map which is created corresponding to a uniform texture image is also stored in the DVD-ROM 25.

The normal map is data expressing, in the form of an RGB value, a pseudo-normal vector set for each pixel of a uniform texture image. Note that a pseudo-normal vector of each pixel is normalized to a unit vector (a vector having the length being one). Note that a pseudo-normal vector of each pixel held in a normal map is hereinafter referred to as a "basic pseudo-normal vector".

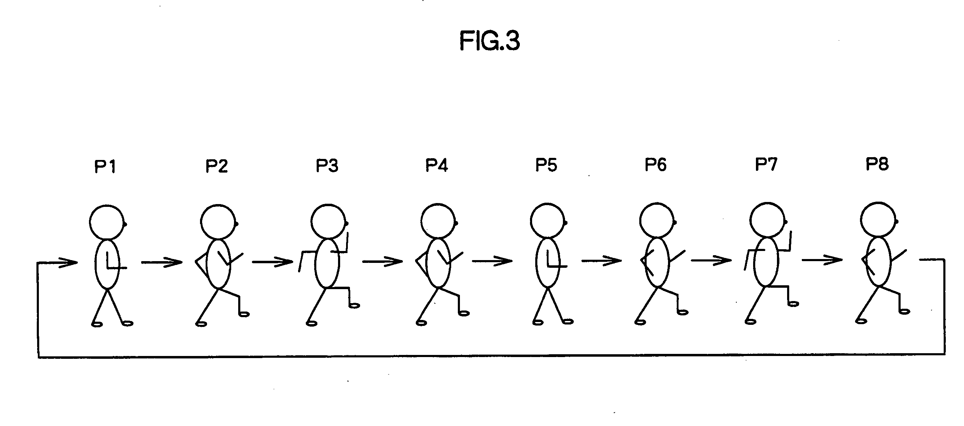

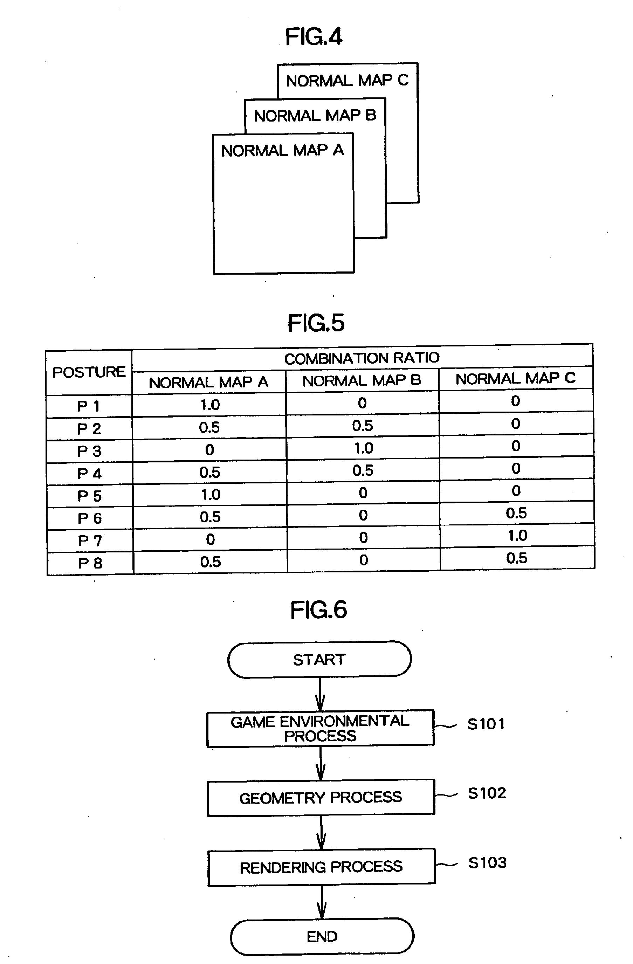

In this embodiment, normal maps corresponding to three respective kinds of representative postures of the player object 46 running are stored in the DVD-ROM 25 as normal maps for a uniform texture image. Fig. 3 shows change in the posture of the player object 46 running. When the player object 46 performs the running motion, the player object 46 repetitively changes the posture thereof from posture P1 to posture P8. Postures P1 and P5 correspond to states in which the right and left arms of the player object 46 are not swung either forward or backward. Postures P2 to P4 correspond to states in which the right arm of the player object 46 is swung forward and the left arm thereof is swung backward. Posture P3 corresponds to a state in which the right arm of the player object 46 is swung further forward than the postures P2 and P4. Posture P6 to P8 correspond to a state in which the right arm of the player object 46 is swung backward and the left arm thereof is swung forward. Posture P7 corresponds to a state in which the left arm of the player object 46 is swung further forward than the postures P6 and P8. In the DVD-ROM 25, three kinds of normal maps A, B, C, are stored, as shown in Fig. 4 for example. Note that the normal map A is a normal map corresponding to the posture P1 or P5. That is, the normal map A is a normal map for expressing shade on the uniform when the player object 46 takes posture P1 or P5. Similarly, the normal map B is a normal map corresponding to the posture P3; the normal map C is a normal map corresponding to the posture P7.

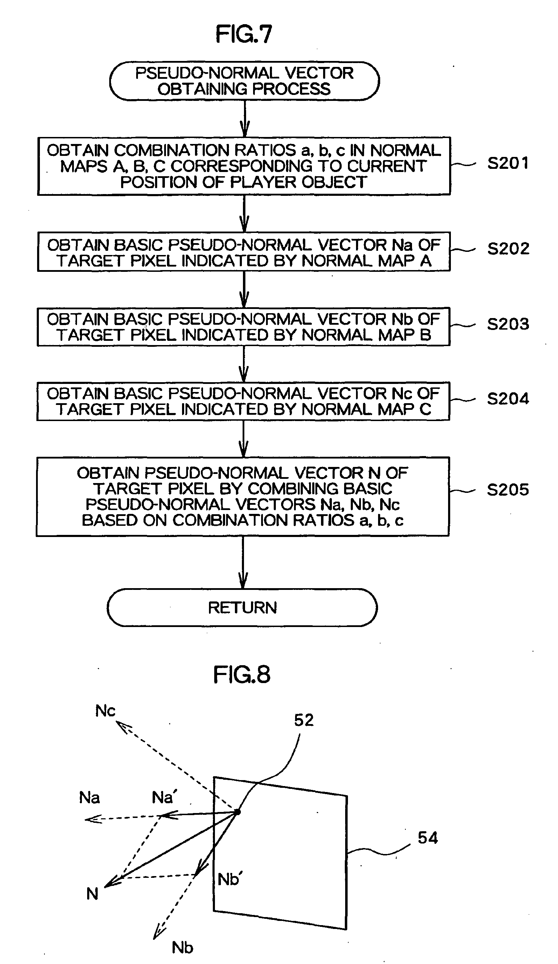

A combination ratio table is also stored in the DVD-ROM 25. Fig. 5 shows one example of a combination ratio table. As shown in Fig. 5, the combination ratio table is data correlating the posture of the player object 46 running with a combination ratio. A combination ratio indicates a combination ratio to be adopted when combining a basic pseudo-normal vector shown in the normal map A, a basic pseudo-normal vector shown in the normal map B, and a basic pseudo-normal vector shown in the normal map C, as to be described later (see S205 in Fig. 7 and Fig. 8).

Information indicating the positions and postures of the respective player objects 46 and ball object 47 placed in the virtual three dimensional space 40 is stored in the main memory 26. For example, information indicating the kind of motion data being reproduced (running motion data and so forth) and information indicating the position being reproduced within the motion data (time elapsed after motion data reproduction began and the like) are stored as information indicating the posture of the player object 46. Further, information indicating the position (viewpoint 48a) and posture (viewing direction 48b) of the virtual camera 48 set in the virtual three dimensional space 40 and information indicating the position of the light source 50 are also stored in the main memory 26.

In the following, a process to be carried out in the game device 10 will be described. Fig. 6 is a flowchart mainly showing those processes, among processes to be carried out in the game device 10 every predetermined period of time (e.g., 1/60th of a second), that are related to the present invention. This process is realized by executing a program read from the DVD-ROM 25 in the game device 10.

As shown in Fig. 6, the game device 10 initially carries out a game environment process (S101). In the game environment process, the position and posture of each object placed in the virtual three dimensional space 40 is calculated. For example, the position and/or posture of the operation target player object 46 is calculated based on an operation signal input from the controller 32, and the position and posture information of each object stored in the main memory 26 is updated based on the calculated result. In the game environment process, the viewpoint 48a, viewing direction 48b, and viewing angle are determined, and a viewing field range is calculated. An object outside the viewing field range is excluded from the targets of a subsequent process.

Subsequently, the game device 10 carries out a geometry process (S102). In the geometry process, coordinates in a world coordinate system are converted to those in a viewpoint coordinate system. The world coordinate system refers to a coordinate system involving the WX, WY, and WZ axes shown in Fig. 2, while the viewpoint coordinate system is a coordinate system having the viewpoint 48a as the origin, the viewing direction 48b as the Z direction, the horizontal direction as the X direction, and the vertical direction as the Y direction. A clipping process is also carried out in the geometry process.

Subsequently, the game device 10 carries out a rendering process (S103). In the rendering process, a game screen image is rendered into a display buffer in the VRAM, based on the coordinates, color information, and alpha value of each vertex of each object in the viewing field range, a texture image to be mapped onto a surface of the object in the viewing field range, and a normal map corresponding to the texture image.

In the rendering process, in rendering the uniform portion of the player object 46, the game device 10 obtains a pseudo-normal vector of each pixel. Fig. 7 is a flowchart of a process for obtaining a pseudo-normal vector of each pixel, and Fig. 8 is a diagram outlining this process.

As shown in Fig. 7, in obtaining a pseudo-normal vector of one (target pixel) of the pixels 52 related to a polygon 54 onto which a uniform texture image is to be mapped, the game device 10 obtains a combination ratio a in the normal map A, a combination ratio b in the normal map B, and a combination ratio c in the normal map C, all corresponding to the current posture of the player object 46, from the combination ratio table (S201). In the above, the game device 10 specifies the current posture of the player object 46, based on the posture information of the player object 46, stored in the main memory 26. Further, the game device 10 determines which of the postures P1 to P8 the current posture of the player object 46 corresponds to, and then obtains the combination ratios corresponding to that posture. For example, in the case where the current posture of the player object 46 corresponds to the posture P1, the game device 10 obtains the combination ratios corresponding to the posture P1.

Further, the game device 10 obtains the basic pseudo-normal vector Na of the pixel 52, held in the normal map A (S202), and similarly obtains the basic pseudo-normal vector Nb of the pixel 52, held in the normal map B (S203). Further, the game device 10 obtains the basic pseudo-normal vector Nc of the pixel 52, held in the normal map C (S204).

Then, the game device 10 combines the basic pseudo-normal vectors Na, Nb, Nc according to the combination ratios a, b, c, obtained at S201, thereby obtaining the pseudo-normal vector N of the pixel 52 (S205). That is, as shown by the expression (1) below, the game device 10 calculates the vector of the sum of the vector Na' obtained by multiplying the basic pseudo-normal vector Na by a coefficient a, the vector Nb' obtained by multiplying the basic pseudo-normal vector Nb by a coefficient b, and the vector Nc' obtained by multiplying the basic pseudo-normal vector Nc by a coefficient c. Then, the game device 10 normalizes the resultant vector into a unit vector, thereby obtaining the pseudo-normal vector N of the pixel 52.

[Expression 1]

$$\vec{N} = a \cdot \vec{Na} + b \cdot \vec{Nb} + c \cdot \vec{Nc} \qquad \cdots (1)$$

Further, in rendering the uniform portion of the player object 46, the game device 10 determines brightness of the respective pixels related to the uniform portion of the player object 46, based on the pseudo-normal vector N obtained as described above. That is, as shown in Fig. 12, the brightness of each pixel 52 is determined such that when the angle θ formed by the light source direction vector L indicating the direction from the pixel 52 to the light source 50 and the pseudo-normal vector N of the pixel 52 is smaller, higher brightness of the pixel 52 results, and when the angle θ is larger, lower brightness of the pixel 52 results. For example, the game device 10 calculates the inner product value of the light source direction vector L and pseudo-normal vector N, and then calculates color information about the pixel, based on the inner product value. As described above, the shading process is applied to the uniform portion of the player object 46, based on the pseudo-normal vectors of the respective pixels of the uniform texture image. That is, fine shading is applied to the uniform portion of the player object 46.

As described above, in rendering the uniform portion of the player object 46 running, the game device 10 obtains a pseudo-normal vector of each pixel, based on the current posture of the player object 46, and carries out the shading process, based on the pseudo-normal vector. With the above, the game device 10 can preferably produce a picture in which the shade expressed on the uniform portion of the player object 46 will change according to change in the posture of the player object 46 running.

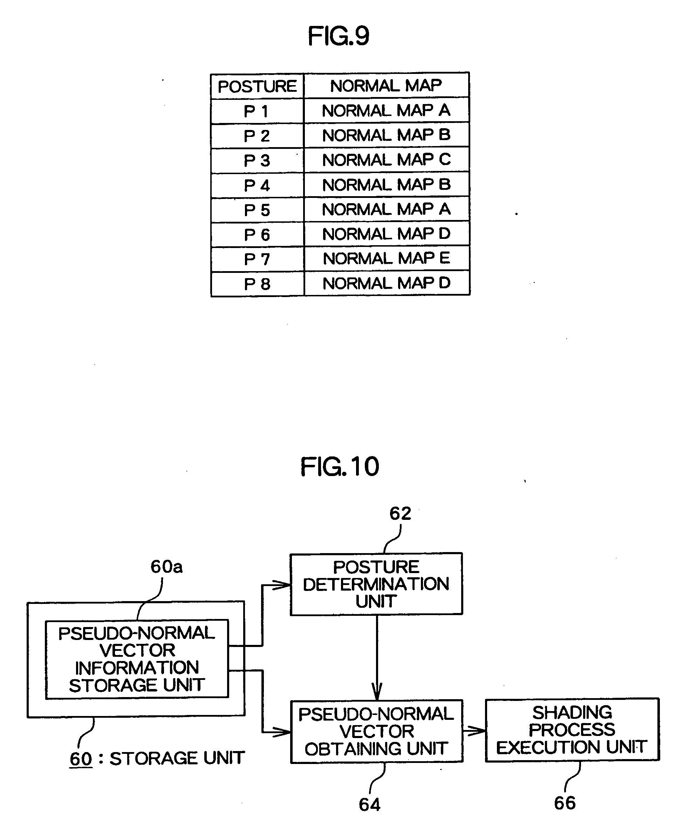

Note that the game device 10 may store the normal map table, such as is shown in, e.g., Fig. 9, instead of storing the combination ratio table, such as is shown in Fig. 5. That is, the game device 10 may store normal maps so as to be correlated to a posture condition concerning the posture of the player object 46. In this case, five kinds of normal maps A to E are stored in the DVD-ROM 25 as normal maps for a uniform texture image.

According to the aspect in which the combination ratio table shown in Fig. 5 is stored, fewer normal maps needs to be stored beforehand, compared to the aspect in which the normal map table shown in Fig. 9 is stored. Consequently, according to the aspect in which the combination ratio table shown in Fig. 5 is stored, the data amount for shade expression on the uniform of the player object 46 can be reduced.

In the following, a function to be realized in the game device 10 will be described. Fig. 10 is a functional block diagram mainly showing those functions, among functions realized in the game device 10, that are related to the present invention. As shown in Fig. 10, the game device 10 comprises, in terms of functions, a storage unit 60, a posture determination unit 62, a pseudo-normal vector obtaining unit 64, and a shading process execution unit 66. These functions are realized by reading a program for carrying out the process shown in, for example, Figs. 6 and 7, from the DVD-ROM 25 and executing the read program in the game device 10.

[Storage Unit]

The storage unit 60 is realized using, e.g., the main memory 26 and/or DVD-ROM 25. Information indicating, e.g., the position and posture of the player object 46 is stored in the storage unit 60.

[Pseudo-Normal Vector Information Storage Unit]

The storage unit 60 includes a pseudo-normal vector information storage unit 60a. The pseudo-normal vector information storage unit 60a stores a posture condition concerning the posture of the player object 46 and the pseudo-normal vector information so as to be correlated to each other. Note that pseudo-normal vector information is information for obtaining a pseudo-normal vector of each pixel of a uniform texture image to be mapped onto a surface of the player object 46.

For example, the storage unit 60 stores a plurality of normal maps (e.g., normal maps A to C) as normal maps for a uniform texture image. In this case, a plurality of basic pseudo-normal vectors (e.g., three basic pseudo-normal vectors) are stored in the storage unit 60, correlated to each pixel of the uniform texture image. Further, in this case, a combination ratio table, such as is shown in, e.g., Fig. 5, is stored in the pseudo-normal vector information storage unit 60a. In the above, the combination ratio stored in the combination ratio table corresponds to "pseudo-normal vector information".

Alternatively, the pseudo-normal vector information storage unit 60a may store a posture condition concerning the posture of the player object 46 and a normal map so as to be correlated to each other. That is, the pseudo-normal vector information storage unit 60a may store a normal map table, such as is shown in, e.g., Fig. 9. In this case, the normal map corresponds to "pseudo-normal vector information".

[Posture Determination Unit]

The posture determination unit 62 determines whether or not the current posture of the player object 46 satisfies the posture condition correlated to the pseudo-normal vector information stored in the pseudo-normal vector information storage unit 60a.

[Pseudo-Normal Vector Obtaining Unit]

When the posture determination unit 62 determines that the posture of the player object 46 satisfies the posture condition, the pseudo-normal vector obtaining unit 64 obtains a pseudo-normal vector for each pixel of a uniform texture image, based on the pseudo-normal vector information stored in the pseudo-normal vector information storage unit 60a so as to be correlated to the posture condition.

[Shading Process Execution Unit]

The shading process execution unit 66 carries out the shading process for a surface (the uniform portion) of the player object 46, based on the pseudo-normal vector obtained by the pseudo-normal vector obtaining unit 64.

As described above, according to the game device 10, a picture in which the shade expressed on the uniform of the player object 46 will change according to change in the posture of the player object 46 running can be preferably produced.

It should be noted that the present invention is not limited to the above described embodiment.

For example, the game device 10 may identify the posture of the player object 46, based on the angle between the bones of both arms of the player object 46 or the rotational angle of the shoulder. That is, a combination ratio or a normal map may be stored so as to be correlated to a condition (posture condition) concerning the angle in the combination ratio table shown in Fig. 5 or normal map table shown in Fig. 9. Alternatively, the game device 10 may identify the posture of the player object 46, based on, for example, the angle between the forward direction of the upper half body of the player object 46 and that of the lower half body thereof. That is, a combination ratio or a normal map may be stored so as to be correlated to a condition (posture condition) concerning the angle in the combination ratio table shown in Fig. 5 or normal map table shown in Fig. 9.

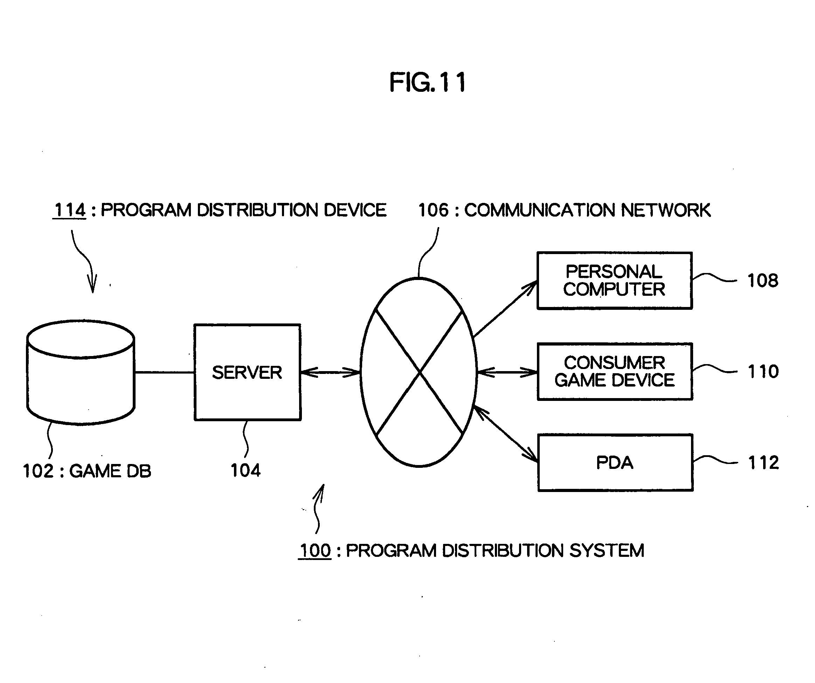

Also, for example, although a program is supplied from the DVD-ROM 25, or an information recording medium, to the consumer game device 11 in the above description, the program may alternatively be distributed via a communication network to a home or the like. Fig. 11 is a diagram showing an overall structure of a program distribution system using a communication network. Referring to Fig. 11, a program distribution method according to the present invention will be described. As shown in Fig. 11, the program distribution system 100 comprises a game database 102, a server 104, a communication network 106, a personal computer 108, a consumer game device 110, and a PDA (personal digital assistant) 112, in which the game database 102 and the server 104 together constitute a program distribution device 114. The communication network 106 comprises, for example, the Internet, a cable television network, and the like. In this system, a program having content identical to that stored in the DVD-ROM 25 is stored in the game database (an information recording medium) 102. When a demander requests game distribution, using the personal computer 108, consumer game device 110, PDA 112, or the like, the request is transmitted via the communication network 106 to the server 104. Then, the server 104, in response to the game distribution request, reads the program from the game database 102, and sends to the entity, such as the personal computer 108, consumer game device 110, PDA 112, or the like, having requested the game distribution. It should be noted that although a game is distributed here in response to a game distribution request, the server 104 may unidirectionally send a game. Also, distribution of all program components necessary to realize a game at once (collective distribution) is not always necessary, and distribution of only a component necessary in each aspect of the game (dividing distribution) is applicable instead. With the above described game distribution via the communication network 106, the demander can readily obtain the program.

Also, for example, the present invention is applicable to a game device for carrying out a game other than a soccer game. Further, the present invention is applicable to an image processing device other than a game device.

**Claims**

1. An image processing device for displaying a picture obtained by looking at a virtual three dimensional space (40) where an object (46) is placed from a given viewpoint (48a), comprising:

   pseudo-normal vector information storage means (60a) for storing a plurality of posture conditions each concerning a corresponding posture (P1-P8) among a plurality of postures (P1-P8) of the object (46) and pseudo-normal vector information for each corresponding posture condition among the plurality of posture conditions for obtaining a pseudo-normal vector for each pixel of a texture image to be mapped onto a surface of the object (46), so as to be correlated to each other;
   posture determination means (62) for determining whether or not the posture (P1-P8) of the object (46) satisfies one of the plurality of posture conditions correlated to the pseudo-normal vector information stored in the pseudo-normal vector information storage means (60a);
   pseudo-normal vector obtaining means (64) for obtaining the pseudo-normal vector for each pixel of the texture image, based on the pseudo-normal vector information stored in the pseudo-normal vector information storage means (60a) so as to be correlated to the posture condition satisfied by the posture (P1-P8) of the object; (46);
   shading process execution means (66) for executing a shading process for the surface of the object (46), based on the pseudo-normal vector obtained by the pseudo-normal vector obtaining means (64);
   basic pseudo-normal vector storage means (60) for storing a plurality of basic pseudo-normal vectors so as to be correlated to each pixel of the texture image,
   wherein
   the pseudo-normal vector information is information indicating a combination ratio for the plurality of basic pseudo-normal vectors for the corresponding posture condition, and
   the pseudo-normal vector obtaining means (64) obtains the pseudo-normal vector for each pixel of the texture image by combining the plurality of basic pseudo-normal vectors stored in the basic pseudo-normal vector storage means (60) so as to be correlated to the pixel, based on the combination ratio correlated to the posture condition satisfied by the posture (P1-P8) of the object (46).

2. A control method for an image processing device for displaying a picture obtained by looking at a virtual three dimensional space (40) where an object (46) is placed from a given viewpoint (48a), comprising:

   a posture determination step of determining whether or not a posture (P1-P8) of the object (46) satisfies one of a plurality of posture conditions correlated to pseudo-normal vector information stored in pseudo-normal vector information storage means (60a) for storing the plurality of posture conditions concerning a corresponding posture (P1-P8) among a plurality of postures (P1-P8) of the object (46) and pseudo-normal vector information for each corresponding posture condition among the plurality of posture conditions for obtaining a pseudo-normal vector for each pixel of a texture image to be mapped onto a surface of the object (46), so as to be correlated to each other;
   a pseudo-normal vector obtaining step of obtaining the pseudo-normal vector for each pixel of the texture image, based on the pseudo-normal vector information stored in the pseudo-normal vector information storage means (60a) so as to be correlated to the posture condition satisfied by the posture (P1-P8) of the object (46);
   a shading process execution step of executing a shading process for the surface of the object (46), based on the pseudo-normal vector obtained at the pseudo-normal vector obtaining step;
   wherein
   the pseudo-normal vector information is information indicating a combination ratio for a plurality of basic pseudo-normal vectors for the corresponding posture condition, which are stored so as to be correlated to each pixel of the texture image, and

the pseudo-normal vector obtaining step obtains the pseudo-normal vector for each pixel of the texture image by combining the plurality of basic pseudo-normal vectors stored in the basic pseudo-normal vector storage means (60) so as to be correlated to the pixel, based on the combination ratio correlated to the posture condition satisfied by the posture (P1-P8) of the object (46).

**3.** A computer readable information recording medium recording a program for causing a computer to function as an image processing device for displaying a picture obtained by looking at a virtual three dimensional space (40) where an object (46) is placed from a given viewpoint (48a), the program causing the computer to function as pseudo-normal vector information storage means (60a), posture determination means (62), pseudo-normal vector obtaining means (64), shading process execution means (66), and basic pseudo-normal vector storage means (60) according to claim 1.

**Patentansprüche**

**1.** Bildverarbeitungsvorrichtung zum Anzeigen eines Bildes, das durch Betrachten eines virtuellen dreidimensionalen Raums (40), in dem ein Objekt (46) angeordnet ist, von einem gegebenen Blickpunkt (48a) aus erhalten wird, wobei die Bildverarbeitungsvorrichtung aufweist:

eine Pseudo-Normalvektorinformationsspeichereinrichtung (60a) zum Speichern von mehreren Haltungsbedingungen, die jeweils eine entsprechende Haltung (P1-P8) aus mehreren Haltungen (P1-P8) des Objektes (46) betreffen, und Pseudo-Normalvektorinformationen für jede entsprechende Haltungsbedingung aus den Haltungsbedingungen zum Erhalten eines Pseudo-Normalvektors für jedes Pixel eines Texturbildes, das auf eine Oberfläche des Objektes (46) abzubilden ist, in Korrelation miteinander;
eine Haltungsbestimmungseinrichtung (62) zum Bestimmen, ob die Haltung (P1-P8) des Objektes (46) eine der Haltungsbedingungen erfüllt, die mit den Pseudo-Normalvektorinformationen, die in der Pseudo-Normalvektorinformationsspeichereinrichtung (60a) gespeichert sind, korreliert sind;
eine Pseudo-Normalvektorerhalteeinrichtung (64) zum Erhalten des Pseudo-Normalvektors für jedes Pixel des Texturbildes auf der Grundlage der Pseudo-Normalvektorinformationen, die in der Pseudo-Normalvektorinformationsspeichereinrichtung (60a) in Korrelation mit der Haltungsbedingung, die von der Haltung (P1-P8) des Objektes (46) erfüllt ist, gespeichert sind;
eine Schattierungsprozessausführungseinrichtung (66) zum Ausführen eines Schattierungsprozesses für die Oberfläche des Objektes (46) auf der Grundlage des Pseudo-Normalvektors, der von der Pseudo-Normalvektorerhalteeinrichtung (64) erhalten wird;
eine Basis-Pseudo-Normalvektorspeichereinrichtung (60) zum Speichern von mehreren Basis-Pseudo-Normalvektoren in Korrelation mit jedem Pixel des Texturbildes, wobei
die Pseudo-Normalvektorinformationen Informationen sind, die ein Kombinationsverhältnis für die Basis-Pseudo-Normalvektoren für die entsprechende Haltungsbedingung angeben, und
die Pseudo-Normalvektorerhalteeinrichtung (64) den Pseudo-Normalvektor für jedes Pixel des Texturbildes durch Kombinieren der Basis-Pseudo-Normalvektoren, die in der Basis-Pseudo-Normalvektorspeichereinrichtung (60) in Korrelation mit dem Pixel gespeichert sind, auf der Grundlage des Kombinationsverhältnisses, das mit der Haltungsbedingung, die durch die Haltung (P1-P8) des Objektes (46) erfüllt ist, korreliert ist.

**2.** Steuerverfahren für eine Bildverarbeitungsvorrichtung zum Anzeigen eines Bildes, das durch Betrachten eines virtuellen dreidimensionalen Raums (40), in dem ein Objekt (46) angeordnet ist, von einem gegebenen Blickpunkt (48a) aus erhalten wird, wobei das Steuerverfahren aufweist:

einen Haltungsbestimmungsschritt zum Bestimmen, ob eine Haltung (P1-P8) des Objektes (46) eine von mehreren Haltungsbedingungen erfüllt, die mit Pseudo-Normalvektorinformationen korreliert sind, die in einer Pseudo-Normalvektorinformationsspeichereinrichtung (60a) zum Speichern der Haltungsbedingungen, die jeweils eine entsprechende Haltung (P1-P8) aus mehreren Haltungen (P1-P8) des Objektes (46) betreffen, und Pseudo-Normalvektorinformationen für jede entsprechende Haltungsbedingung aus den Haltungsbedingungen zum Erhalten eines Pseudo-Normalvektors für jedes Pixel eines Texturbildes, das auf eine Oberfläche des Objektes (46) abzubilden ist, in Korrelation miteinander;
einen Pseudo-Normalvektorerhalteschritt zum Erhalten des Pseudo-Normalvektors für jedes Pixel des Texturbildes auf der Grundlage der Pseudo-Normalvektorinformationen, die in der Pseudo-Normalvektorinformationsspeichereinrichtung (60a) in Korrelation mit der Haltungsbedingung, die durch die Haltung (P1-P8) des Objektes (46) erfüllt ist, gespeichert sind;

einen Schattierungsprozessausführungsschritt zum Ausführen eines Schattierungsprozesses für die Oberfläche des Objektes (46) auf der Grundlage des Pseudo-Normalvektors, der in dem Pseudo-Normalvektorerhalteschritt erhalten wird; wobei

die Pseudo-Normalvektorinformationen Informationen sind, die ein Kombinationsverhältnis für mehrere Basis-Pseudo-Normalvektoren für die entsprechende Haltungsbedingung angeben, die in Korrelation mit jedem Pixel des Texturbildes gespeichert sind, und

der Pseudo-Normalvektorerhalteschritt den Pseudo-Normalvektor für jedes Pixel des Texturbildes durch Kombinieren der Basis-Pseudo-Normalvektoren, die in der Basis-Pseudo-Normalvektorspeichereinrichtung (60) in Korrelation mit dem Pixel gespeichert sind, auf der Grundlage des Kombinationsverhältnisses, das mit der Haltungsbedingung, die durch die Haltung (P1-P8) des Objektes (46) korreliert ist, erhält.

3. Computerlesbares Informationsaufzeichnungsmedium, das ein Programm zum Bewirken aufzeichnet, dass ein Computer als eine Bildverarbeitungsvorrichtung zum Anzeigen eines Bildes dient, das durch Betrachten eines virtuellen dreidimensionalen Raums (40), in dem ein Objekt (46) angeordnet ist, von einem gegebenen Blickpunkt (48a) aus erhalten wird, wobei das Programm bewirkt, dass der Computer als Pseudo-Normalvektorinformationsspeichereinrichtung (60a), Haltungsbestimmungseinrichtung (62), Pseudo-Normalvektorerhalteeinrichtung (64), Schattierungsprozessausführungseinrichtung (66) und Basis-Pseudo-Normalvektorspeichereinrichtung (60) nach Anspruch 1 dient.

**Revendications**

1. Dispositif de traitement d'images pour visualiser une image obtenue en regardant dans un espace tridimensionnel virtuel (40) où un objet (46) est placé à partir d'un point de vision donné (48a), comprenant :

des moyens de stockage d'informations de vecteurs pseudo-normaux (60a) pour stocker une pluralité de conditions de posture concernant chacune une posture correspondante (P1-P8) parmi une pluralité de postures (P1-P8) de l'objet (46) et des informations de vecteurs pseudo-normaux pour chaque condition de posture correspondante parmi la pluralité de conditions de posture pour obtenir un vecteur pseudo-normal pour chaque pixel d'une image de texture à mapper sur une surface de l'objet (46), de manière à être corrélés entre eux ;

des moyens de détermination de posture (62) pour déterminer si la posture (P1-P8) de l'objet (46) satisfait ou non une de la pluralité de conditions de posture corrélée aux informations de vecteurs pseudo-normaux stockées dans les moyens de stockage d'informations de vecteurs pseudo-normaux (60a) ;

des moyens d'obtention de vecteur pseudo-normal (64) pour obtenir le vecteur pseudo-normal pour chaque pixel de l'image de texture, sur la base des informations de vecteurs pseudo-normaux stockés dans les moyens de stockage d'informations de vecteurs pseudo-normaux (60a) de manière à être corrélé à la condition de posture satisfaite par la posture (P1-P8) de l'objet (46) ;

des moyens d'exécution de procédé d'ombrage (66) pour exécuter un procédé d'ombrage pour la surface de l'objet (46), sur la base du vecteur pseudo-normal obtenu par les moyens d'obtention de vecteur pseudo-normal (64) ;

des moyens de stockage de vecteurs pseudo-normaux de base (60) pour stocker une pluralité de vecteurs pseudo-normaux de base de manière à être corrélés à chaque pixel de l'image de texture,

dans lequel

les informations de vecteurs pseudo-normaux sont des informations indiquant un rapport de combinaison pour la pluralité de vecteurs pseudo-normaux de base pour la condition de posture correspondante, et

les moyens d'obtention de vecteur pseudo-normal (64) obtiennent le vecteur pseudo-normal pour chaque pixel de l'image de texture en combinant la pluralité de vecteurs pseudo-normaux de base stockée dans les moyens de stockage de vecteurs pseudo-normaux de base (60) de manière à être corrélés au pixel, sur la base du rapport de combinaison corrélé à la condition de posture satisfaite par la posture (P1-P8) de l'objet (46).

2. Procédé de commande pour un dispositif de traitement d'images pour visualiser une image obtenue en regardant dans un espace tridimensionnel virtuel (40) où un objet (46) est placé à partir d'un point de vision donné (48a), comprenant :

une étape de détermination de posture pour déterminer si une posture (P1-P8) de l'objet (46) satisfait ou non une d'une pluralité de conditions de posture corrélée aux informations de vecteurs pseudo-normaux stockées dans des moyens de stockage d'informations de vecteurs pseudo-normaux (60a) pour stocker la pluralité de conditions de posture concernant une posture correspondante (P1-P8) parmi une pluralité de postures (P1-P8) de l'objet (46) et des informations de vecteurs pseudo-normaux pour chaque condition de posture correspondante parmi la pluralité de conditions de posture pour obtenir un vecteur pseudo-normal pour chaque pixel d'une image de texture à mapper sur une surface de l'objet (46), de manière à être corrélés entre eux ;

une étape d'obtention de vecteur pseudo-normal pour obtenir le vecteur pseudo-normal pour chaque pixel de l'image de texture, sur la base des informations de vecteurs pseudo-normaux stockés dans les moyens de stockage d'informations de vecteurs pseudo-normaux (60a) de manière à être corrélé à la condition de posture satisfaite par la posture (P1-P8) de l'objet (46) ;

une étape d'exécution de procédé d'ombrage pour exécuter un procédé d'ombrage pour la surface de l'objet (46), sur la base du vecteur pseudo-normal obtenu dans l'étape d'obtention de vecteur pseudo-normal ;

dans lequel

les informations de vecteurs pseudo-normaux sont des informations indiquant un rapport de combinaison pour une pluralité de vecteurs pseudo-normaux de base pour la condition de posture correspondante, qui sont stockés de manière à être corrélés à chaque pixel de l'image de texture, et

l'étape d'obtention de vecteur pseudo-normal obtient le vecteur pseudo-normal pour chaque pixel de l'image de texture en combinant la pluralité de vecteurs pseudo-normaux de base stockés dans les moyens de stockage de vecteurs pseudo-normaux de base (60) de manière à être corrélés au pixel, sur la base du rapport de combinaison corrélé à la condition de posture satisfaite par la posture (P1-P8) de l'objet (46).

3. Support d'enregistrement d'informations lisible par ordinateur enregistrant un programme pour faire fonctionner un ordinateur comme un dispositif de traitement d'images pour visualiser une image obtenue en regardant dans un espace tridimensionnel virtuel (40) où un objet (46) est placé à partir d'un point de vision donné (48a), le programme faisant fonctionner l'ordinateur comme des moyens de stockage d'informations de vecteurs pseudo-normaux (60a), des moyens de détermination de posture (62), des moyens d'obtention de vecteur pseudo-normal (64), des moyens d'exécution de procédé d'ombrage (66) et des moyens de stockage de vecteurs pseudo-normaux de base (60) selon la revendication 1.

## FIG.1

EP 2 065 854 B1

# FIG.2

40 : VIRTUAL THREE DIMENSIONAL SPACE

EP 2 065 854 B1

FIG.3

## FIG.4

NORMAL MAP C

NORMAL MAP B

NORMAL MAP A

## FIG.5

| POSTURE | COMBINATION RATIO | | |
|---|---|---|---|
| | NORMAL MAP A | NORMAL MAP B | NORMAL MAP C |
| P 1 | 1.0 | 0 | 0 |
| P 2 | 0.5 | 0.5 | 0 |
| P 3 | 0 | 1.0 | 0 |
| P 4 | 0.5 | 0.5 | 0 |
| P 5 | 1.0 | 0 | 0 |
| P 6 | 0.5 | 0 | 0.5 |
| P 7 | 0 | 0 | 1.0 |
| P 8 | 0.5 | 0 | 0.5 |

## FIG.6

START

↓

GAME ENVIRONMENTAL PROCESS — S101

↓

GEOMETRY PROCESS — S102

↓

RENDERING PROCESS — S103

↓

END

## FIG.7

```
        ┌─────────────────────────────┐
        │   PSEUDO-NORMAL VECTOR      │
        │     OBTAINING PROCESS       │
        └─────────────────────────────┘
                      │
                      ▼
```

OBTAIN COMBINATION RATIOS a, b, c IN NORMAL MAPS A, B, C CORRESPONDING TO CURRENT POSITION OF PLAYER OBJECT    ～ S201

OBTAIN BASIC PSEUDO-NORMAL VECTOR Na OF TARGET PIXEL INDICATED BY NORMAL MAP A    ～ S202

OBTAIN BASIC PSEUDO-NORMAL VECTOR Nb OF TARGET PIXEL INDICATED BY NORMAL MAP B    ～ S203

OBTAIN BASIC PSEUDO-NORMAL VECTOR Nc OF TARGET PIXEL INDICATED BY NORMAL MAP C    ～ S204

OBTAIN PSEUDO-NORMAL VECTOR N OF TARGET PIXEL BY COMBINING BASIC PSEUDO-NORMAL VECTORS Na, Nb, Nc BASED ON COMBINATION RATIOS a, b, c    ～ S205

```
        ┌─────────────────────────────┐
        │          RETURN             │
        └─────────────────────────────┘
```

## FIG.8

## FIG.9

| POSTURE | NORMAL MAP |
|---------|------------|
| P 1 | NORMAL MAP A |
| P 2 | NORMAL MAP B |
| P 3 | NORMAL MAP C |
| P 4 | NORMAL MAP B |
| P 5 | NORMAL MAP A |
| P 6 | NORMAL MAP D |
| P 7 | NORMAL MAP E |
| P 8 | NORMAL MAP D |

## FIG.10

```
                                        62
          60a              ┌──────────────────────┐
                           │       POSTURE         │
   ┌───────────────────┐   │   DETERMINATION       │
   │ ┌───────────────┐ │   │       UNIT            │
   │ │ PSEUDO-NORMAL │ │   └──────────────────────┘
   │ │    VECTOR     │ │              │
   │ │ INFORMATION   │ │              ▼
   │ │ STORAGE UNIT  │ │   ┌──────────────────┐  ┌──────────────────┐
   │ └───────────────┘ │   │  PSEUDO-NORMAL   │  │    SHADING       │
   └───────────────────┘   │     VECTOR       │  │    PROCESS       │
                           │ OBTAINING UNIT   │  │ EXECUTION UNIT   │
   60 : STORAGE UNIT       └──────────────────┘  └──────────────────┘
                                    64                    66
```

# FIG.11

114 : PROGRAM DISTRIBUTION DEVICE    106 : COMMUNICATION NETWORK

PERSONAL COMPUTER — 108

SERVER

CONSUMER GAME DEVICE — 110

PDA — 112

102 : GAME DB    104

100 : PROGRAM DISTRIBUTION SYSTEM

EP 2 065 854 B1

# FIG.12

**EP 2 065 854 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001283250 A

- JP 2004102900 A

**Non-patent literature cited in the description**

- **BRETT ALLEN.** *Learning body shape models from real-world data,* 2005, 15-32